# EUROPÄISCHE PATENTSCHRIFT

(11) **EP 0 638 973 B1**
(45) Veröffentlichungstag und Bekanntmachung des Hinweises auf die Patenterteilung: **03.09.1997**
(21) Anmeldenummer: 94103984.4
(22) Anmeldetag: 15.03.1994
(51) Int. Cl.: H02G 5/06

(54) **Stromschienenschutzkasten**
Bus bar protection conduit
Conduit de protection de barres omnibus

(30) Priorität: 19.06.1993 DE 9309171 U
(43) Veröffentlichungstag der Anmeldung: 15.02.1995
(73) Patentinhaber: REHAU AG + Co, 95111 Rehau (DE)
(72) Erfinder: Schinzel, Hartmut, D-95111 Rehau (DE); Herrmann, Dieter, D-95111 Rehau (DE); Dreves, Hans-Wilhelm, D-95111 Rehau (DE)

(56) Entgegenhaltungen:
- DE-C- 889 925
- DE-U- 6 607 093
- FR-A- 2 148 185
- US-A- 2 039 793

## Beschreibung

Die Erfindung betrifft einen Stromschienen-Schutzkasten für von oben, von unten oder von der Seite bestrichene Stromschienen mit Distanzhaltern zur klammernden Umgreifung der Stromschienen-Kopfbereiche, an den Innenwänden des Stromschienen-Schutzkastens anliegenden Außenwänden und axial zur Stromschienenachse verlaufenden, von den freien Längsrändern des Stromschienen-Schutzkastens rastend übergriffenen Endbereichen.

Aus der DE-U 71 43 970 ist eine Abdeckung für Stromleitungen bekannt, die über Distanzhalter auf den Stromleitungen festgelegt ist. Diese Distanzhalter sind im Spritzguß- oder Blasverfahren hergestellte Formteile, die in ihrem Haltesitz auf der Stromleitung mit Vorspannung ausgerüstet sind, so daß sie auf der Stromleitung klemmend festgelegt werden können. Die bekannten Distanzhalter besitzen Verrasterungsnasen bzw. Abstützfüße, die sich bei der Herstellung der Verbindung zwischen dem Distanzhalter und der Abdeckung an zugeordneten Wandbereichen der Abdeckung entweder abstützen oder von diesen rastend hintergriffen werden. Die bekannten Distanzhalter sind mit ihrer flächig ausgedehnten Querschnittsform und ihren tolerierten Abmessungen in erster Linie im Spritzgußverfahren herstellbar, da grundsätzlich nur bei diesem Verfahren die erforderliche Maßgenauigkeit erzielt werden kann. In begrenztem Maße ist hier allerdings auch die Herstellung im Blasverfahren anwendbar. Aus dem Propektprogramm der REHAU AG + Co "Stromschienen-Abdecksysteme", Lieferprogramm E 55.100 KEH 1.90 ist eine Stromschienenabdeckung bekannt, die beispielsweise beim Bau von U-Bahnen eingesetzt werden kann. Diese Stromschienenabdeckung besteht aus einem Stromschienen-Schutzkasten und einem Distanzhalter. Der in dieser Veröffentlichung gezeigte Distanzhalter ist ein hohles Blasteil, welches an einem gestreckten Mittelbereich zwei voneinander abgewandt abgekröpfte Endbereiche aufweist.

Diese abgekröpften Endbereiche werden beim Einsatz auf dem Stromschienenkopfbereich hinter diesem Kopfbereich eingerastet oder eingeknüpft, so daß der Distanzhalter fest auf dem Stromschienenkopfbereich aufgerastet werden kann.

Die bekannten Distanzhalter werden in einem Abstand von ca. 0,4 bis 1 m auf die Stromschienenkopfbereiche aufgesetzt. Sie liegen mit ihren Außenwänden an den Innenwänden des Stromschienen-Schutzkastens an und bilden nach dessen Aufsetzen kammerartige Unterteilungen von Distanzhalter zu Distanzhalter. Dadurch entstehen in Längsrichtung der Stromschiene voneinander abgeschottete Luftpolster um die Stromschiene herum, wodurch ein Luftaustausch in Längsrichtung verhindert bzw. sehr stark eingeschränkt wird. Dadurch kommt es bei der Erwärmung der Stromschiene im Betrieb zu Wärmestauerscheinungen, da die überschüssige Wärme durch die stehenden Luftpolster nicht abgeführt werden kann. Hierdurch bedingt kann es zu örtlich stark unterschiedlichen Längenausdehnungen der Stromschienen-Schutzkästen kommen, was insbesondere bei dem Übergang von Schatten-zu Sonnenbereichen zu negativen Einflüssen auf das Abdeckungssystem insgesamt führen kann. Durch solche unterschiedlichen Längenausdehnungen der Stromschienen-Schutzkästen kann es zum Verklemmen bzw. zu einem Verschieben auf den Distanzhaltern kommen, wodurch die Distanzhalter aus ihrem Klemmsitz auf dem Stromschienenkopfbereich sogar gelöst werden können.

Um diesen Nachteil abzustellen, ist es aus der DE-U 92 05 979 bekannt, Distanzhalter mit kontrollierten, ringförmig geschlossenen oder einseitig offenen Profilabschnitten zu verwenden. Diese Distanzhalter bilden mit ihren die Stromschienen übergreifenden innerenWandbereichen und ihren dem Stromschienen-Schutzkasten zugewandten äußeren Wandbereichen wenigstens eine Durchgangsöffnung für den ungehinderten Luftdurchtritt zwischen dem Stromschienen-Schutzkasten und den die Stromschiene abdeckenden Wandbereichen.

Dadurch können zwar die übermäßigen Längenausdehnungen des Stromschienenschutzkastens beim Übergang von erwärmten in beschattete Zonen ausgeglichen werden, eine unkontrollierte Längenausdehnung der Stromschienen-Schutzkästen in beiden Richtungen wird dadurch jedoch nicht verhindert.

Hier setzt die Erfindung ein, die es sich zur Aufgabe gestellt hat, die Längenausdehnung der Stromschienen-Schutzkästen auf den Distanzhaltern definiert aufzufangen und nur in einer Richtung wirken zu lassen. Erfindungsgemäß wird dazu vorgeschlagen, daß axial benachbarte Stromschienen-Schutzkästen an ihren freien Enden in definiertem Spaltabstand voneinander auf den Distanzhaltern angeordnet sind, daß die den freien Enden axial benachbarten Stromschienen-Schutzkästen zugeordneten Distanzhalter jeweils eine Anschlagbegrenzung aufweisen, welche in den Spaltabstand zwischen den freien Enden benachbarter Stromschienen-Schutzkästen aufragen und eine Längenausdehnung der Stromschienen-Schutzkästen nur in einer Achsrichtung erlauben, und daß die freien Enden zweier axial benachbarter Stromschienen-Schutzkästen von einem langgestreckten, muffenartigen Deckelement spaltabdeckend übergriffen sind.

Die als Blas- oder Spritzgußteile ausgebildeten Distanzhalter, die den mittleren Bereichen eines Stromschienen-Schutzkastens zugeordnet sind, besitzen die gleiche Raumform, wie sie in der DE-U 92 05 979 beschrieben ist. Lediglich die Distanzhalter, die den freien Enden axial benachbarter Stromschienen-Schutzkästen zugeordnet sind, sind gemäß der Neuerung mit einer Anschlagbegrenzung ausgestattet. Diese Anschlagbegrenzung kann gleichzeitig mit dem Blasformvorgang als Anschlagnocken ausgebildet sein, sie können jedoch auch in Form von mechanischen Anschlagelementen wie Spreiznietschrauben und dergleichen gebildet sein. Die neuerungsgemäße Anschlagbegrenzung an den freien Enden benachbarter Stromschienen-Schutzkästen bewirkt, daß diese Distanzhalter bei einer Längenänderung des Stromschienen-Schutzkastens nicht verschoben werden können.

Der Anschlag des freien Endes des Stromschienen-Schutzkastens an dem Anschlagnocken bewirkt, daß ab diesem Zeitpunkt die weitergehende Längenänderung des Stromschienen-Schutzkastens in die entgegengesetzte Richtung vonstatten geht, so daß diese Längenänderung durch das übergreifende muffenartige Deckelement des nächstfolgenden Stromschienen-Schutzkastens aufgenommen wird. Neuerungsgemäß ist damit der Stromschienen-Schutzkasten einseitig festgelegt, während auf der anderen Seite eine Längenänderung durch Ausdehnung möglich ist.

Vorteilhaft ist das muffenartige Deckelement nur mit dem freien Ende eines der beiden axial benachbarten Stromschienen-Schutzkästen verbunden. Dadurch ergibt sich die Längenänderungsmöglichkeit, kombiniert mit der optimalen Abdeckung des Spaltes zwischen zwei benachbarten Stromschienen-Schutzkästen. Die Verbindung zwischen dem Stromschienen-Schutzkasten und dem muffenartigen Deckelement kann mechanisch mittels Nieten, Schrauben oder durch Kleben erfolgen, sie kann aber auch in Form einer Aufweitung direkt am freien Ende eines Stromschienen-Schutzkastens angeformt sein.

Die neuerungsgemäße Kombination zwischen den mit Anschlagnocken versehenen Distanzhaltern im einen Endbereich eines Stromschienen-Schutzkastens mit dem muffenartigen Deckelement im anderen Endbereich des Stromschienen-Schutzkastens schafft bei ausdehnungsbedingten Längenänderungen des Stromschienen-Schutzkastens eine Festseite und eine Losseite. Nachdem die Festseite durch Anschlag des freien Endes des Stromschienen-Schutzkastens an den zugeordneten Anschlagnocken des Distanzhalters gebildet worden ist, kann eine zusätzliche Längenänderung nur in Richtung des anderen Endbereichs des Stromschienen-Schutzkastens erfolgen. Dieser andere Endbereich ist aber von dem muffenartigen Deckelement des axial benachbarten Stromschienen-Schutzkastens überdeckt, so daß die dortigen Spaltbildungen unterschiedlicher Breite, die durch die temperaturbedingten Änderungen hervorgerufen werden, in diesem Bereich aufgefangen werden können.

Das muffenartige Deckelement ist dabei so lang ausgerichtet, daß ein Heraustreten des zugeordneten freien Endes des benachbarten Stromschienen-Schutzkastens aus der Überdeckung durch das muffenartige Deckelement ausgeschlossen ist. Auf diese Weise wird neuerungsgemäß eine Stromschienenabdeckung geschaffen, die eine dauerhafte, vollflächige Abdeckung gewährleistet und eine Verschiebung der Distanzhalter oder des Stromschienen-Schutzkastens über die zulässigen Bereiche hinaus verhindert.

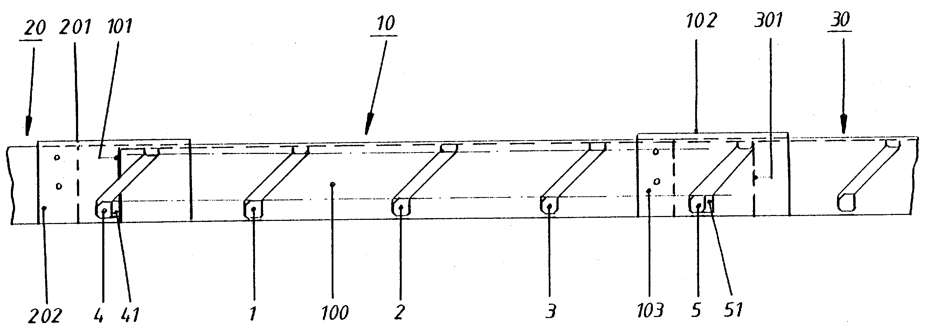

In der Zeichnung ist eine Stromschienenabdeckung schematisch dargestellt. Es ist ein zentraler Stromschienen-Schutzkasten 10 dargestellt, an welchen axial ein zweiter Stromschienen-Schutzkasten 20 und ein dritter Stromschienen-Schutzkasten 30 angeschlossen ist. Der zentrale Stromschienen-Schutzkasten 10 übergreift die lediglich angedeutete Stromschiene 100, auf der die Distanzhalter 1, 2, 3, 4, 5 angeordnet sind. Die Distanzhalter 1, 2, 3 sind nach dem Stand der Technik hergestellte normale Abstandhalter, während die Distanzhalter 4, 5 mit den neuerungsgemäßen Anschlagbegrenzungen 41, 51 ausgestattet sind. Das freie Ende 101 liegt in der gezeigten Darstellung an der Anschlagbegrenzung 41 des Distanzhalters 4 bündig an. Das freie Ende 101 ist ferner von dem muffenartigen Deckelement 201 abdeckend übergriffen. Das muffenartige Deckelement 201 ist mit dem Endbereich 202 des Stromschienen-Schutzkastens 20 fest verbunden. Am gegenüberliegenden freien Ende 103 des zentralen Stromschienen-Schutzkastens 10 ist das muffenartige Deckelement 102 fest angeordnet. Die gezeigte Darstellung läßt erkennen, daß das freie Ende 301 des Stromschienen-Schutzkastens 30 und die Anschlagbegrenzung 51 des Distanzhalters 5 noch eine erhebliche Wegstrecke auseinander liegen, so daß sich entweder der Stromschienen-Schutzkasten 10 in Richtung auf das freie Ende 301 des Stromschienen-Schutzkastens 30 oder das freie Ende 301 des Stromschienen-Schutzkastens 30 in Richtung auf die Anschlagbegrenzung 51 des Distanzhalters 5 ausdehnen können. In beiden Richtungen sind hier die entsprechenden Bewegungsmöglichkeiten gegeben.

Dabei werden die einzelnen Wegstrecken entsprechend den Längenabmessungen der Stromschienen-Schutzkästen so eingestellt, daß keine Längenänderung mehr möglich ist, wenn die freien Enden benachbarter Stromschienen-Schutzkästen an den jeweiligen Anschlagbegrenzungen anliegen. Die Entfernungen müssen demnach so gestaltet sein, daß die größtmögliche Ausdehnung entsprechend berücksichtigt ist, um Verwerfungen der axial benachbarten Stromschienen-Schutzkästen untereinander zu verhindern.

## Patentansprüche

1. Stromschienen-Schutzkasten (10,20,30) für von oben, von unten oder von der Seite bestrichene Stromschienen mit Distanzhaltern (1,2,3,4,5) zur klammernden Umgreifung der Stromschienen-Kopfbereiche, an den Innenwänden des Stromschienen-Schutzkastens anliegenden Außenwänden und axial zur Stromschienenachse verlaufenden, von den freien Längsrändern des Stromschienen-Schutzkastens rastend übergriffenen Endbereichen, dadurch gekennzeichnet, daß axial benachbarte Stromschienen-Schutzkästen (10, 20, 30) an ihren freien Enden (101, 201, 301) in definiertem Spaltabstand (S) voneinander auf den Distanzhaltern (1, 2, 3, 4, 5) angeordnet sind, daß die den freien Enden (101, 301) axial benachbarten Stromschienen-Schutzkästen (10, 30) zugeordneten Distanzhalter (4, 5) jeweils eine Anschlagbegrenzung (41, 51) aufweisen, welche in den Spaltabstand (S) zwischen den freien Enden (101, 301 ) benachbarter Stromschienen-Schutzkästen (10, 30) aufragen und eine Längenausdehnung der Stromschienen-Schutzkästen (10, 30) nur in einer Achsrichtung erlauben, und daß die freien Enden (101, 201, 301) zweier axial benachbarter Stromschienen-Schutzkästen (10, 20, 30) von einem langgestreckten, muffenartigen Deckelement (102, 201) spaltabdeckend übergriffen sind.

2. Stromschienen-Schutzkasten nach Anspruch 1, dadurch gekennzeichnet, daß das muffenartige Deckelement (201, 102) nur mit dem freien Ende eines der beiden axial benachbarten Stzromschienen-Schutzkästen (20, 10) verbunden ist.

3. Stromschienen-Schutzkasten nach Anspruch 2, dadurch gekennzeichnet, daß die Verbindung mechanisch mittels Nieten, Schrauben oder durch Kleben erfolgt.

4. Stromschienen-Schutzkasten nach Anspruch 1, dadurch gekennzeichnet, daß das muffenartige Deckelement (201, 102) in Form einer Aufweitung direkt am freien Ende eines Stromschienen-Schutzkastens (20, 10) angeformt ist.

## Claims

1. Live-rail protective casing for rails coated from the top, from the bottom or from the side, with spacers to encircle and retain the live-rail top sections, with outer faces resting against the inner faces of the live-rail protective casing and with end sections running along the live-rail axis and enclasped by the unattached longitudinal edges of the live-rail protective casing, characterised by the fact that the unattached ends (101, 201, 301) of the axially juxtaposed casings (10, 20, 30) are retained at a specified distance (S) on the spacers ( 1, 2, 3, 4, 5), that each of the spacers (4, 5) for the unattached ends (101, 301) of the axially juxtaposed live-rail protective casings (10, 30) is provided with a stop (41, 51) which projects up into the space (S) between the unattached ends (101, 301) of juxtaposed live-rail protective casings (10, 30) and only permits longitudinal expansion of the live-rail protective casing in a direction parallel to the axis, and characterised by the fact that the unattached ends (101, 201, 301) of two axially juxtaposed live-rail protective casings (10, 20, 30) are bridged by a collar type of cover element (102, 201).

2. Live-rail protective casing as in Claim 1 characterised by the fact that the collar type cover element (201, 102) is connected to the unattached end of only one of the two axially juxtaposed live-rail protective casings (20, 10).

3. Live-rail protective casing as in Claim 2 characterised by the fact that the connection is made mechanically by rivets, screws or an adhesive.

4. Live-rail protective casing as in Claim 1 characterised by the fact that the collar type cover element (201, 102) is formed by widening the unattached end of a live-rail protective casing (20, 10).

## Revendications

1. Caisson de protection de rails conducteurs enduit par en haut, par en bas ou par côté, avec des écarteurs entourant par agrafage les zones de tête des rails conducteurs, avec des parois extérieures plaquées contre les parois intérieures du caisson de protection de rails conducteurs et avec des zones d'extrémité longeant l'axe du rail conducteur, recouvertes par les bords longitudinaux libres encliquetés du caisson de protection du rail conducteur, caractérisé en ce que les extrémités libres des (101, 201, 301) caissons de protection de rails conducteurs voisins (10, 20, 30) dans le sens axial sont disposés sur les écarteurs (1, 2, 3, 4, 5) à une distance définie (S) entre eux, que les écarteurs (4, 5) affectés aux extrémités libres (101, 301) de caissons de protection de rails conducteurs voisins (10, 30) dans le sens axial présentent chacun une limitation par butée (41, 51) prenant dans la fente (S) entre les extrémités libres (101, 301) de caissons de protection de rails conducteurs voisins (10, 30) et ne permettent un allongement longitudinal des caissons de protection des rails conducteurs (10, 30) que dans un sens axial et que les extrémités libres (101, 201, 301) de deux caissons de protection de rails conducteurs voisins (10, 20, 30) dans le sens axial sont recouvertes par un élément de recouvrement de la fente (102, 201) en forme de manchon étiré en longueur.

2. Caisson de protection de rails conducteurs selon la revendication 1, caractérisé en ce que l'élément de recouvrement en forme de manchon (201, 102) est relié uniquement à l'extrémité libre de l'un des deux caissons de protection des rails conducteurs voisins (20, 10) dans le sens axial.

3. Caisson de protection de rails conducteurs selon la revendication 2, caractérisé en ce que la liaison est réalisée mécaniquement à l'aide de rivets, de vis ou par collage.

4. Caisson de protection de rails conducteurs selon la revendication 1, caractérisé en ce que l'élément de recouvrement en forme de manchon (201, 102) est un évasement directement formé à l'extrémité libre d'un caisson de protection de rails conducteurs (20, 10).
